# EUROPÄISCHE PATENTSCHRIFT

(11) **EP 3 098 183 B1**
(45) Veröffentlichungstag und Bekanntmachung des Hinweises auf die Patenterteilung: **10.01.2018**
(21) Anmeldenummer: 16001201.9
(22) Anmeldetag: 27.05.2016
(51) Int. Cl.: B65D 85/52, B65D 75/58, B65D 65/04, B65D 65/42, B65D 85/50

(54) **VERPACKUNGSELEMENT, INSBESONDERE FÜR SCHNITTBLUMEN UND BLUMEN IN TÖPFEN**
PACKAGING ELEMENT, IN PARTICULAR FOR CUT FLOWERS AND FLOWERS IN POTS
ÉLEMENT D'EMBALLAGE, EN PARTICULIER POUR FLEURS COUPEES ET FLEURS EN POTS

(30) Priorität: 29.05.2015 DE 202015003775 U
(43) Veröffentlichungstag der Anmeldung: 30.11.2016
(73) Patentinhaber: Weber Verpackungen GmbH & Co. KG, 58739 Wickede/Ruhr (DE)
(72) Erfinder: JAHN, Klaus, 33699 Bielefeld (DE)
(74) Vertreter: Cohausz Hannig Borkowski Wißgott

(56) Entgegenhaltungen:
- EP-A1- 1 690 801
- WO-A1-97/12819
- DE-A1- 19 909 448
- DE-U1-202009 018 673
- DE-U1-202014 002 785
- JP-A- 2013 023 275
- JP-A- 2013 136 413
- NL-A- 8 201 851
- NL-C- 1 035 902
- US-A- 2 047 980
- US-A- 4 657 142
- US-A- 5 111 638
- US-A- 5 467 573
- US-A1- 2004 003 537
- US-A1- 2004 031 197

## Beschreibung

Die Erfindung betrifft ein Verpackungselement umfassend ein trapezförmiges Vorderteil und ein trapezförmiges Rückenteil, wobei Vorderteil und Rückenteil jeweils ein erstes Paar von zwei einander gegenüberliegenden parallelen Grundseiten und ein zweites Paar von zwei je an beide Grundseiten angrenzenden nicht parallelen Schenkel aufweisen und wobei Vorderteil und Rückenteil im Bereich ihrer Schenkel miteinander verbunden sind, bevorzugt im Randbereich ihrer jeweiligen übereinanderliegenden Schenkel miteinander derart verbunden sind, dass eine zum Rückenteil weisende innere Randfläche des Vorderteils verklebt ist mit einer zum Vorteil weisenden inneren Randfläche des Rückenteils und wobei zwischen Vorderteil und Rückenteil durch Beabstandung der Teile voneinander ein Bereich zur Aufnahme einer Ware, insbesondere konischen Ware, bevorzugt eines Blumentopfes oder Blumenstraußes ausbildbar ist, wofür zumindest zwischen den oben angeordneten langen Grundseiten eine Öffnung ausgebildet ist, wobei am Vorderteil oberhalb einer zwischen den Schenkeln, bevorzugt parallel zu den Grundseiten des Vorderteiles verlaufenden, im Vorderteil angeordneten Schwächungslinie eine Handhabe, insbesondere eine manuell ergreifbare Lasche befestigt ist, mittels der ein oberhalb der Schwächungslinie liegender Bereich (des Vorderteiles vom unterhalb der Schwächungslinie liegender Bereich des Vorderteiles trennbar ist.

Die Verbindung von Vorderteil und Rückenteil im Bereich der Schenkel kann durch eine Falte oder eine Falz ausgebildet sein. Bevorzugt kann es vorgesehen sein, dass die Randbereiche der jeweiligen übereinanderliegenden Schenkel miteinander derart verbunden sind, dass eine zum Rückenteil weisende innere Randfläche des Vorderteils verklebt ist mit einer zum Vorteil weisenden inneren Randfläche des Rückenteils

Verpackungselemente der eingangs genannten Art sind im Stand der Technik bekannt, z.B. aus der Publikation WO 97/12819 A1 und EP 1 690 801 A1. Einen ähnlichen Stand der Technik zeigt auch DE 20 2014 002 785 U1 derselben Anmelderin. JP 2013 136413 A zeigt die Nutzung einer Handhabe. JP 2013 023275 A zeigt ebenso Blumenverpackungen.

Diese Art von Verpackungselement wird z.B. verwendet, um getopfte Blumen, Blumensträuße oder Pflanzen zu transportieren oder auch zum Verkauf zu präsentieren. Besonders für den Transport ist es vorgesehen, das Verpackungselement mit einer solchen Höhe, also Abstand zwischen den parallelen oberen und unteren Grundseiten auszustatten, dass ein Bereich einer Blume oder Pflanze, der über einen Blumentopf hinausragt von dem Verpackungselement umgeben ist, wodurch ein Transportschutz erzielt wird. Häufig werden die oberen Bereiche einer Pflanze / Blume durch das Verpackungselement auch verdichtet, so dass eine Pflanze / Blume eine geringe Stellfläche beim Transport benötigt.

Nach dem Transport soll hingegen die Pflanze / Blume genügen Licht erhalten, wofür die Verdichtung eines oberen Bereiches aufzuheben ist. Die Verpackung muss demnach entfernt werden.

Weiterhin soll bei der Verkaufspräsentation der Verbraucher eine möglichst uneingeschränkte Ansicht auf die Blume oder Pflanze erhalten, was unproblematisch ist, solange ein Verpackungselement dieser Art komplett aus durchsichtiger Folie gefertigt ist, was typischerweise der Fall ist, jedoch aus Gründen des Umweltschutzes bedenklich ist.

Aus Umweltschutzgründen ist eine Tendenz zu verzeichnen, Verpackungselemente dieser Art aus einem Papiermaterial oder Papierverbundmaterial zu fertigen. Solche Materialen sind jedoch nicht durchsichtig, so dass ein Verbraucher eine verpackte Blume oder Pflanze nicht ansehen kann. In diesem Fall müsste die Verpackung vor der Verkaufspräsentation entfernt werden.

Aufgabe der Erfindung ist es, ein Verpackungselement der eingangs genannten Art so weiterzubilden, dass nach einem Transportschutz durch das angelegte Verpackungselement schnell und unproblematisch eine Pflanze oder ein Blumenstrauß entpackt werden kann. Weiterhin ist es eine Aufgabe, dass die Pflanze/Blume schnell genügend Licht erhält und dass auch eine Verkaufspräsentation unter voller Ansicht auf den entfalteten Blumen- oder Pflanzenbereich oberhalb des Topfes ermöglicht ist.

Diese Aufgabe wir dadurch gelöst, dass das Rückenteil und der unter der Schwächungslinie liegende Bereich des Vorderteiles aus einem Papier- oder Papierverbundmaterial ausgebildet ist und der über der Schwächungslinie liegende Bereich des Vorderteiles aus einer bevorzugt transparenten Folie.Ein Aspekt der Erfindung liegt darin, dass zumindest das Vorderteil, gemäß einer später erwähnten bevorzugten Weiterbildung auch das Rückenteil in Höhenrichtung in einen unteren Bereich und einen oberen Bereich durch eine Schwächungslinie unterteilt ist. Durch das Anbringen einer Handhabe über der Schwächungslinie, also am oberen Bereich des Vorderteiles kann das Vorderteil auf einfachste Weise vom unteren Bereich definiert abgetrennt werden.

Dafür muss nur die Handhabe, z.B. eine Lasche ergriffen und an dieser gezogen werden, wodurch sich die Verbindung von unterem Bereich und oberen Bereich des Vorderteiles an der Schwächungslinie auflöst. Das Vorderteil kann hiernach vom Verpackungselement abgerissen werden. Die transportierte Pflanze /Blume wird dadurch im oberen Bereich nicht mehr durch das Verpackungselement zusammengehalten und kann sich wieder entfalten und genügend Licht erhalten.

Eine Schwächungslinie kann z.B. durch eine linienförmige Perforation oder eine Materialverdünnung, insbesondere jeweils mehrfach lokal / punktuell einlang eines linienförmigen Verlaufes ausgebildet sein.

Auch wird zur Verkaufspräsentation der Blick auf die Pflanze / Blume freigegeben, selbst wenn das Verpackungselement nicht aus Folie hergestellt ist.

Die Handhabe, insbesondere Lasche ist bevorzugt unmittelbar angrenzend an die Schwächungslinie oder zumindest nahe zu dieser, insbesondere in einem Abstand kleiner als 2 cm, bevorzugt kleiner 1 cm, weiter bevorzugt kleiner 0,5 cm auf dem Vorderteil befestigt.

Die Erfindung kann bevorzugt vorsehen, dass - sofern eine Verklebung der Schenkel vorhanden ist - die Verklebung der Schenkel zwischen Vorderteil und Rückenteil zumindest im oberen Bereich oberhalb der Schwächungslinie lösbar ausgebildet ist. Bevorzugt kann hierdurch bewirkt werden, dass mittels der Handhabe der obere Bereich des Vorderteiles vom Rückenteil an der Verklebung abtrennbar ist, insbesondere ohne Zerstörung des oberen Bereiches des Vorderteils, insbesondere was wichtig ist, wenn der obere Bereich des Vorderteil aus einem anderen Material ausgebildet ist als der untere und/oder das Rückenteil. Eine solche Verklebung kann z.B. durch beabstandete Leimpunkte ausgebildet sein.

Sofern eine Verbindung von Vorderteil und Rückenteil an den Schenkeln durch eine Falte / Falz vorliegt kann auch eine jeweilige Schwächungslinie im Faltenbereich oder Falzbereich vorgesehen sein, um ein Abtrennen von oberem Vorderteil vom Rückenteil zu begünstigen.

Durch die Erfindung ist es möglich, das Verpackungselement aus Papier oder einem Papierverbundmaterial zu fertigen und nach dem Transport durch Ablösen zumindest des oberen Bereiches des Vorderteils eine Entfaltung der Pflanze / der Blume zu ermöglichen und den Blick freizugeben.

Die Erfindung sieht vor, dass das Rückenteil und der unter der Schwächungslinie liegende Bereich des Vorderteiles aus einem Papier- oder Papierverbundmaterial ausgebildet ist und der über der Schwächungslinie liegende Bereich des Vorderteiles aus einer bevorzugt transparenten Folie. So kann eine Pflanze durch den transparenten Vorderteil auch während des Transportes oder anschließend, selbst wenn das obere Vorderteil nicht sofort entfernt wird, genügend Licht erhalten, wobei der überwiegende Teil des Verpackungselementes aus Papier oder Papierverbundmaterial gefertigt sein kann.

Bei der Folienausführung des oberen Bereiches des Vorderteils kann es die Erfindung vorsehen, dass der untere Bereich des Vorderteiles an seinen oberen Rand den unteren Rand des oberen Folienbereiches des Vorderteiles überdeckt. Diese Überdeckung kann sowohl so ausgebildet sein, dass der untere Bereich vorne liegt, also in Richtung zum Äußeren des Verpackungselementes weist, also auch dass der untere Bereich hinten liegt, also zum Inneren des Verpackungselementes weist.

Hier kann weiterhin bevorzugt die Schwächungslinie in den oberen Folienbereich des Vorderteiles eingebracht sein und durch den oberen Rand des unteren Bereiches des Vorderteiles überdeckt sein. Eine solche Schwächungslinie kann wie vorangehend erwähnt z.B. als Perforation ausgebildet sein.

Um ein insgesamt stabiles Vorderteil aus den beiden Materialien zu erhalten, kann sodann im Überdeckungsbereich unter der Schwächungslinie der obere Folienbereich des Vorderteiles und der untere Bereich des Vorderteiles durch eine Verklebung verbunden sind.

Die Erfindung kann bei der Folienausführung des oberen Bereiches des Vorderteils, oder allgemein, wenn das Vorderteil zwischen oben und unten aufgeteilt ist, auch vorsehen, dass der Verbindungsbereich zwischen dem unteren Bereich des Vorderteiles und dem oberen Bereich des Vorderteiles die Schwächungslinie ausbildet oder diese zumindest umfasst. So kann die Schwächungslinie hier auch durch die Verklebung, insbesondere konkret durch eine Klebemittelspur / Leimspur ausgebildet sein, welche die aneinander angrenzenden, insbesondere sich überlappenden Ränder von oberem und unterem Bereich verbindet und die bei einer Kraftbeanspruchung durch Ziehen an der Handhabe aufreisst.

In bevorzugter Weiterbildung kann auch das Rückenteil eine zwischen den Schenkeln, bevorzugt parallel zu den Grundseiten verlaufende Schwächungslinie aufweisen. So kann auf einfache Art und Weise auch der obere Bereich des Rückenteiles abgetrennt werden. Auch hier kann diese Schwächungslinie durch eine Perforation oder Materialverdünnung ausgebildet sein oder bei einer-Unterteilung des Rückenteils in oberen und unteren Bereich durch die Verbindung, insbesondere die Klebemittelspur, welche die beiden Bereiche verbindet.

Hiernach bleibt bevorzugt lediglich der Topf einer Pflanze / Blume vom Rest des Verpackungselementes umschlossen oder auch dieser Rest wird entfernt, so dass insgesamt durch das vorherigen Entfernen der oberen Bereiche das Auspacken wesentlich erleichtert wird, ohne dass man die Pflanze im Verpackungselement ergreifen und an dieser ziehen muss.

Die Erfindung kann vorsehen, dass die Schwächungslinie des Rückenteils zur Schwächungslinie des Vorderteiles parallel und beabstandet verläuft, insbesondere mit einem Abstand kleiner als 10 mm, bevorzugt kleiner gleich 5 mm. Dabei kann weiterhin bevorzugt die Schwächungslinie des Rückenteils fluchtend mit der oberen Kante des unteren Bereiches des Vorderteiles angeordnet sein, was fertigungstechnisch günstig ist.

Bevorzugt sieht die Erfindung vor, dass die Schwächungslinie des Vorderteiles, insbesondere auch die Schwächungslinie des Rückenteiles in einem Abstand zur kurzen Grundseite von Vorderteil und/oder Rückteil angeordnet ist, der kleiner ist als 50% des Abstandes zwischen den langen und kurzen Grundseiten. Bezogen auf die Höhe wird somit die jeweilige Schwächungslinie unterhalb der Mitte positioniert.

Eine Weiterbildung kann auch vorsehen, dass die Trapezhöhe, insbesondere also der Abstand zwischen den parallelen Grundseiten bei dem Vorderteil kleiner ist als bei dem Rückenteil, insbesondere derart, dass das Rückenteil im Bereich seiner oberen Grundseite des Trapezes von dem Vorderteil nicht überdeckt ist. Eine solche Ausführung erleichtert es, eine Beabstandung von ursprünglich aufeinanderliegendem Vorderteil und Rückenteil vorzunehmen, um einen Topf in den eröffneten Bereich einzusetzen.

Vorteilhaft kann der nicht überdeckte Bereich des Rückenteils an einer Schwächungslinie vom überdeckten Bereich abtrennbar sein. Eine solche Abtrennung kann z.B. direkt nach der Verpackung vorgenommen werden.

Verpackungselemente der erfindungsgemäßen Art können sowohl unten geschlossene Beutel als auch bevorzugt im geöffneten Zustand einen sich verjüngenden Schlauch mit beidseitig offenen Enden ausbildet.

Die Ausbildung von Vorderteil und Rückenteil aus Papier oder Papierverbundmaterial im unteren Bereich hat den Nachteil, dass bei einer benötigten Wässerung der verpackten Pflanze / Blume diese Papierbereiche Wasser ziehen und sich unschön verfärben oder hierdurch instabil werden.

Um dies zu vermeiden kann es eine Weiterbildung vorsehen, dass das Papier-oder Papierverbundmaterial von Vorderteil und Rückenteil im Bereich der unteren kurzen Grundseiten jeweils wasserabweisend, bevorzugt wasserdicht ausgebildet ist. Beispielsweise kann dies durch eine Beschichtung oder Kaschierung erzielt werden, bevorzugt in einer Höhe von 3 bis 20 mm, d.h. die Beschichtung / Kaschierung überdeckt insgesamt diesen genannten Höhenbereich. Verpackte Pflanzen /Blumen können sodann problemlos in ein flaches Wasserbad eingestellt werden ohne negative Auswirkung auf das Verpackungselement.

Eine mögliche Beschichtung kann dadurch ausgebildet sein, dass der Bereich der unteren Grundseiten von Vorderteil und Rückenteil in ein flüssiges Beschichtungsmittel getaucht wurde, insbesondere so dass sich das Beschichtungsmittel im Grundseitenbereich bevorzugt außen- und innenseitig an Vorderteil bzw. Rückenteil anlegt und somit die jeweilige untere Kante bis zur Beschichtungshöhe wasserdicht versiegelt. Ein flüssiges Beschichtungsmittel kann auch auf jede andere Weise um die jeweils untere Kante der kurzen Grundseiten herum aufgetragen werden.

In einer besonders vorteilhaften Ausführung kann es die Erfindung vorsehen, dass eine Kaschierung ausgebildet ist durch einen ersten Folienklebestreifen, der im Bereich der unteren kurzen Grundseite des Vorderteiles von dessen Innenseite um die Kante herum auf die Außenseite umgeschlagen ist und durch einen zweiten Folienklebestreifen, der im Bereich der unteren kurzen Grundseite des Rückenteiles von dessen Innenseite um die Kante herum auf die Außenseite umgeschlagen ist. Bevorzugt verläuft der Folienklebestreifen hierbei in seiner Längserstreckungsrichtung parallel zur jeweiligen Grundseite und umgibt die untere Kante von Vorderteil bzw. Rückenteil.

Um einen Wassereintritt in das Papier auch am jeweiligen Klebestreifenende sicher zu verhindern kann das Vorderteil und Rückenteil jeweils im Bereich der beiden unteren Ecken, einen Ausschnitt oder eine Ausstanzung aufweisen und das jeweilige Klebeband in diesen Eckbereichen auf sich selbst verklebt sein. Die Höhe der Ausstanzung und die Höhe des Klebestreifens sind dabei bevorzugt übereinstimmend.

Ein Ausführungsbeispiel der Erfindung wird anhand der nachfolgenden Figuren beschrieben.

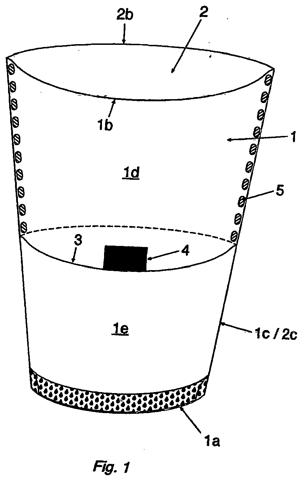

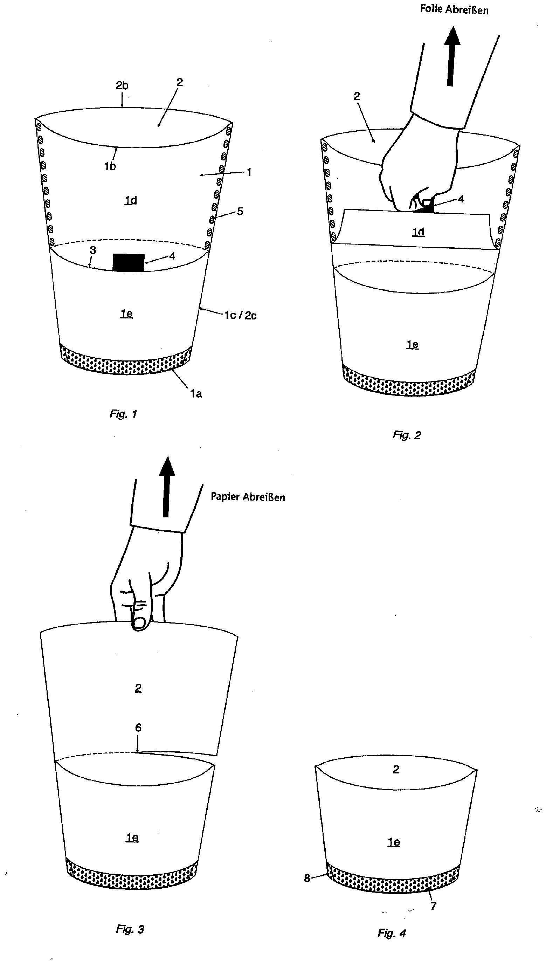

Figur 1 zeigt ein Verpackungselement, bei dem Vorderteil (1) und Rückenteil (2) jeweils trapezförmig ausgebildet sind mit unteren und oberen parallelen Grundseiten 1a,2a, 1b, 2b sowie seitlichen nicht parallelen Schenkeln 1c und 2c.

Das Rückenteil 2 und der untere Bereich 1e des Vorderteils 1 sind hier aus Papier hergestellt. Der obere Bereich 1d des Vorderteil ist aus durchsichtiger Folie ausgebildet und mit dem unteren Bereich verklebt. Die Verklebung ist von dem unteren Papierbereich 1e überdeckt.

Der Folienbereich 1d des Vorderteil 1 weist eine parallel zur Grundseite 1a verlaufende Schwächungslinie 3 auf, über der, hier mittig zu Breite eine Lasche 4 am Folienbereich befestigt ist.

Wie Figur 2 zeigt kann durch Ziehen an der Lasche 4 der Folienbereich 1d vom unteren Papierbereich 1e abgetrennt und nach oben weggezogen werden, wobei gleichzeitig sich eine Leimpunkt-Klebeverbindung 5 an den Schenkel 1c/2c zwischen Rückenteil 2 und dem Folienbereich 1d auftrennt. Der Folienbereich kann so bevorzugt ohne dessen Zerstörung entfernt werden und sortenrein entsorgt werden. Hierdurch verbleibt nur der Anteil aus Papier.

Figur 3 visualisiert, dass auch das Rückenteil 2 eine Schwächungslinie 6 aufweist, so dass auch bei diesem der obere Bereich abgetrennt werden kann und nun nur noch ein untere Bereich des Verpackungselementes verbleibt, wie es Figur 4 verdeutlich.

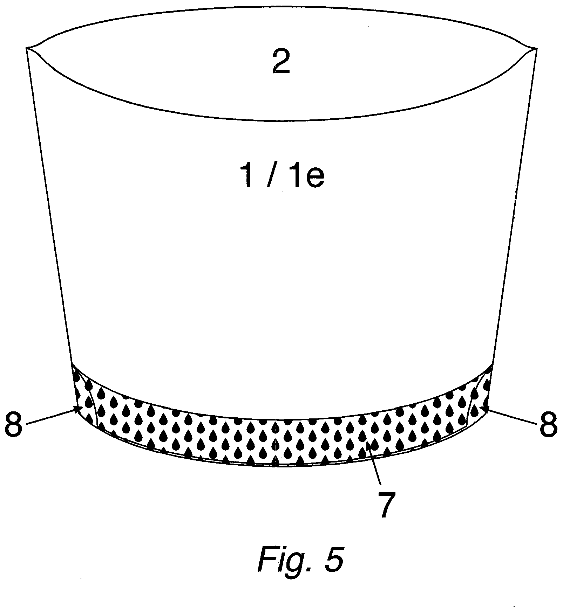

Figur 5 zeigt den verbleibenden Bereich im Detail. Hier ist erkennbar, dass als Feuchtigkeitsschutz sowohl beim Vorderteil 1 bzw. dessen unteren Bereich 1e als auch beim Rückenteil 2 um deren jeweilige untere Kante an der kurze Grundseite ein Klebestreifen 7 herumgeschlagen ist. In den Ecken 8 haben Vorderteil und Rückteil jeweils einen Ausschnitt oder eine Ausstanzung 8. In diesem Bereich klebt das Klebeband auf sich selbst. Von unten anstehendes Wasser findet somit keinen Weg in den Papierbereich des unteren Verpackungselemente-Bereiches.

## Patentansprüche

1. Verpackungselement umfassend ein trapezförmiges Vorderteil (1) und ein trapezförmiges Rückenteil (2), wobei Vorderteil (1) und Rückenteil (2) jeweils ein erstes Paar von zwei einander gegenüberliegenden parallelen Grundseiten (1a, 1b, 2a, 2b) und ein zweites Paar von zwei je an beide Grundseiten (1a, 1b, 2a, 2b) angrenzenden nicht parallelen Schenkel (1c, 2c) aufweisen und wobei Vorderteil (2) und Rückenteil (1) im Bereich ihrer Schenkel miteinander verbunden sind, bevorzugt im Randbereich ihrer jeweiligen übereinanderliegenden Schenkel (1c) miteinander derart verbunden sind, dass eine zum Rückenteil (1) weisende innere Randfläche des Vorderteils (2) verklebt ist mit einer zum Vorteil (2) weisenden inneren Randfläche des Rückenteils (1) und wobei zwischen Vorderteil (2) und Rückenteil (1) durch Beabstandung der Teile voneinander ein Bereich zur Aufnahme einer Ware, insbesondere konischen Ware, bevorzugt eines Blumentopfes oder Blumenstraußes ausbildbar ist, wofür zumindest zwischen den oben angeordneten langen Grundseiten eine Öffnung ausgebildet ist, wobei am Vorderteil (1) oberhalb einer zwischen den Schenkeln (1c, 2c), bevorzugt parallel zu den Grundseiten (1a, 1b) des Vorderteiles (1) verlaufenden, im Vorderteil (1) angeordneten Schwächungslinie (3) eine Handhabe (4), insbesondere eine manuell ergreifbare Lasche (4) befestigt ist, mittels der ein oberhalb der Schwächungslinie (3) liegender Bereich (1d) des Vorderteiles (1) vom unterhalb der Schwächungslinie (3) liegender Bereich (1e) des Vorderteiles (1) trennbar ist, **dadurch gekennzeichnet, dass** das Rückenteil (2) und der unter der Schwächungslinie (3) liegende Bereich des Vorderteiles (1) aus einem Papier- oder Papierverbundmaterial ausgebildet ist und der über der Schwächungslinie (3) liegende Bereich (1d) des Vorderteiles (1) aus einer bevorzugt transparenten Folie.

2. Verpackungselement nach Anspruch 1, **dadurch gekennzeichnet, dass** die Verklebung (5) der Schenkel (1c, 2c) zwischen Vorderteil (1) und Rückenteil (2) zumindest im oberen Bereich oberhalb der Schwächungslinie (3) lösbar ausgebildet ist, insbesondere durch beabstandete Leimpunkte.

3. Verpackungselement nach Anspruch 2, **dadurch gekennzeichnet, dass** mittels der Handhabe (4) der obere Bereich (1d) des Vorderteiles (1) vom Rückenteil (2) an der Verklebung (5) abtrennbar ist, insbesondere ohne Zerstörung des oberen Bereiches (1d) des Vorderteils (1).

4. Verpackungselement nach einem der vorherigen Ansprüche, **dadurch gekennzeichnet, dass** der untere Bereich (1e) des Vorderteiles (1) an seinem oberen Rand den unteren Rand des oberen Folienbereiches (1d) des Vorderteiles (1) überdeckt.

5. Verpackungselement nach Anspruch 4, **dadurch gekennzeichnet, dass** die Schwächungslinie (3) in den oberen Folienbereich (1d) des Vorderteiles (1) eingebracht ist und durch den oberen Rand des unteren Bereiches (1e) des Vorderteiles (1) überdeckt ist oder zumindest an diesen angrenzt.

6. Verpackungselement nach Anspruch 4 oder 5 **dadurch gekennzeichnet, dass** im Überdeckungsbereich unter der Schwächungslinie (3) der obere Folienbereich (1d) des Vorderteiles (1) und der untere Bereich (1e) des Vorderteiles (1) durch eine Verklebung verbunden sind.

7. Verpackungselement nach einem der vorherigen Ansprüche, **dadurch gekennzeichnet, dass** das Rückenteil (2) eine zwischen den Schenkeln (2c), bevorzugt parallel zu den Grundseiten verlaufende Schwächungslinie (6) aufweist.

8. Verpackungselement nach Anspruch 7, **dadurch gekennzeichnet, dass** die Schwächungslinie (6) des Rückenteils (2) zur Schwächungslinie (3) des Vorderteiles (1) parallel, insbesondere parallel beabstandet verläuft, insbesondere mit einem Abstand kleiner als 10 mm, bevorzugt kleiner gleich 5 mm.

9. Verpackungselement nach Anspruch 7 oder 8, **dadurch gekennzeichnet, dass** die Schwächungslinie (6) des Rückenteils (2) fluchtend mit der oberen Kante des unteren Bereiches (1e) des Vorderteiles (1) angeordnet ist.

10. Verpackungselement nach einem der vorherigen Ansprüche, **dadurch gekennzeichnet, dass** die Schwächungslinie (3) des Vorderteiles (1), insbesondere auch die Schwächungslinie (6) des Rückenteiles (2) in einem Abstand zur kurzen Grundseite (1a, 2a) von Vorderteil (1) und/oder Rückteil (2) angeordnet ist, der kleiner ist als 50% des Abstandes zwischen den langen und kurzen Grundseiten (1a,1b,2a,2b).

11. Verpackungselement nach einem der vorherigen Ansprüche, **dadurch gekennzeichnet, dass** die Trapezhöhe, insbesondere also der Abstand zwischen den parallelen Grundseiten (1a, 1b) bei dem Vorderteil (1) kleiner ist als bei dem Rückenteil (2), insbesondere derart, dass das Rückenteil (2) im Bereich seiner oberen Grundseite (2b) des Trapezes von dem Vorderteil (1) nicht überdeckt ist.

12. Verpackungselement nach Anspruch 11, **dadurch gekennzeichnet, dass** der nicht überdeckte Bereich des Rückenteils (2) an einer Schwächungslinie vom überdeckten Bereich abtrennbar ist.

13. Verpackungselement nach einem der vorherigen Ansprüche, **dadurch gekennzeichnet, dass** es im geöffneten Zustand einen unten geschlossenen Beutel oder einen sich verjüngenden Schlauch mit beidseitig offenen Enden bildet.

14. Verpackungselement nach einem der vorherigen Ansprüche, **dadurch gekennzeichnet, dass** das Papier-oder Papierverbundmaterial von Vorderteil (1) und Rückenteil (2) im Bereich der unteren kurzen Grundseiten (1a, 2a) jeweils wasserabweisend, bevorzugt wasserdicht ausgebildet ist, insbesondere durch eine Beschichtung oder Kaschierung, bevorzugt in einer Höhe von 3 bis 20 mm

15. Verpackungselement nach Anspruch 14, **dadurch gekennzeichnet, dass** die Beschichtung (7) ausgebildet ist durch einen ersten Folienklebestreifen (7), der im Bereich der unteren kurzen Grundseite (1a) des Vorderteiles von dessen Innenseite auf die Außenseite umgeschlagen ist und durch einen zweiten Folienklebestreifen (7), der im Bereich der unteren kurzen Grundseite (2a) des Rückenteiles (2) von dessen Innenseite auf die Außenseite umgeschlagen ist.

16. Verpackungselement nach Anspruch 15, **dadurch gekennzeichnet, dass** Vorderteil (1) und Rückenteil (2) jeweils im Bereich der beiden unteren Ecken, einen Ausschnitt (8) oder eine Ausstanzung (8) aufweisen und das jeweilige Klebeband (7) in diesen Eckbereichen auf sich selbst verklebt ist.

## Claims

1. Packaging element comprising a trapezoidal front part (1) and a trapezoidal rear part (2), wherein the front part (1) and rear part (2) each have a first pair of two mutually opposite parallel base sides (1a, 1b, 2a, 2b) and a second pair of two non-parallel legs (1c, 2c), which are each adjacent to the two base sides (1a, 1b, 2a, 2b), and wherein the front part (2) and rear part (1) are connected to one another in the region of their legs, and are preferably connected to one another in the peripheral region of their respective legs (1c) which are located one above the other, such that an inner peripheral surface of the front part (2), said inner surface being oriented towards the rear part (1), is adhesively bonded to an inner peripheral surface of the rear part (1), said inner surface being oriented towards the advantage (2), and wherein a region for accommodating an item, in particular a conical item, preferably a flower pot or bouquet of flowers, can be formed between the front part (2) and rear part (1) by virtue of the parts being spaced apart from one another, an opening being formed for said conical item at least between the long base sides arranged at the top, wherein, above a weakening line (3) which is arranged in the front part (1) and runs between the legs (1c, 2c), preferably parallel to the base sides (1a, 1b) of the front part (1), the front part (1) has fastened on it a handle (4), in particular a manually grippable tab (4), by means of which a region (1d) of the front part (1), said region being located above the weakening line (3), can be separated from the region (1e) of the front part (1), said region being located beneath the weakening line (3), **characterized in that** the rear part (2) and that region of the front part (1) which is located beneath the weakening line (3) are formed from a paper material or paper-composite material and the region (1d) of the front part (1), said region being located above the weakening line (3), is made of a preferably transparent film.

2. Packaging element according to Claim 1, **characterized in that** the adhesive bonding (5) of the legs (1c, 2c) between the front part (1) and rear part (2) is of releasable design, in particular is designed by spaced-apart spots of glue, at least in the upper region above the weakening line (3).

3. Packaging element according to Claim 2, **characterized in that**, by means of the handle (4), the upper region (1d) of the front part (1) can be detached from the rear part (2) at the adhesive bonding (5), in particular without the upper region (1d) of the front part (1) being destroyed.

4. Packaging element according to one of the preceding claims, **characterized in that** the upper periphery of the lower region (1e) of the front part (1) covers over the lower periphery of the upper film region (1d) of the front part (1).

5. Packaging element according to Claim 4, **characterized in that** the weakening line (3) is made in the upper film region (1d) of the front part (1) and is covered over by the upper periphery of the lower region (1e) of the front part (1), or is at least adjacent to the same.

6. Packaging element according to Claim 4 or 5, **characterized in that**, in the covering-over region beneath the weakening line (3), the upper film region (1d) of the front part (1) and the lower region (1e) of the front part (1) are connected by adhesive bonding.

7. Packaging element according to one of the preceding claims, **characterized in that** the rear part (2) has a weakening line (6) running between the legs (2c), preferably parallel to the base sides.

8. Packaging element according to Claim 7, **characterized in that** the weakening line (6) of the rear part (2) runs parallel to the weakening line (3) of the front part (1), in particular parallel thereto and at a distance therefrom, in particular at a distance of smaller than 10 mm, preferably smaller than or equal to 5 mm.

9. Packaging element according to Claim 7 or 8, **characterized in that** the weakening line (6) of the rear part (2) is arranged in alignment with the upper edge of the lower region (1e) of the front part (1).

10. Packaging element according to one of the preceding claims, **characterized in that** the weakening line (3) of the front part (1), in particular also the weakening line (6) of the rear part (2), is spaced apart from the short base side (1a, 2a) of the front part (1) and/or rear part (2) by a distance which is smaller than 50% of the distance between the long and short base sides (1a, 1b, 2a, 2b).

11. Packaging element according to one of the preceding claims, **characterized in that** the height of the trapezium, in particular therefore the distance between the parallel base sides (1a, 1b), for the front part (1) is smaller than that for the rear part (2), in particular such that, in the region of its upper trapezium base side (2b), the rear part (2) is not covered over by the front part (1).

12. Packaging element according to Claim 11, **characterized in that** that region of the rear part (2) which is not covered over can be detached from the covered-over region at a weakening line.

13. Packaging element according to one of the preceding claims, **characterized in that**, in the open state, it forms a bag which is closed at the bottom or a tapering flexible tube which is open at both ends.

14. Packaging element according to one of the preceding claims, **characterized in that** the paper material or paper-composite material of the front part (1) and rear part (2) is of water-repellent design, preferably water-tight design, in each case in the region of the lower, short base sides (1a, 2a), this being provided in particular by a coating or lamination, preferably over a height of 3 to 20 mm.

15. Packaging element according to Claim 14, **characterized in that** the coating (7) is formed by a first adhesive-bonding film strip (7), which, in the region of the lower, short base side (1a) of the front part, is folded over from the inner side of said front part onto the outer side, and by a second adhesive-bonding film strip (7), which, in the region of the lower, short base side (2a) of the rear part (2), is folded over from the inner side of said rear part onto the outer side.

16. Packaging element according to Claim 15, **characterized in that** the front part (1) and rear part (2) each have a cutout (8) or a punched-out portion (8) in the region of the two lower corners, and the respective adhesive-bonding tape (7) is adhesively bonded to itself in these corner regions.

## Revendications

1. Élément d'emballage comprenant une partie avant en forme de trapèze (1) et une partie arrière en forme de trapèze (2), la partie avant (1) et la partie arrière (2) présentant chacune une première paire de deux côtés de base parallèles opposés l'un à l'autre (1a, 1b, 2a, 2b) et une deuxième paire de deux branches non parallèles (le, 2c) adjacentes à chaque fois aux deux côtés de base (1a, 1b, 2a, 2b), et la partie avant (2) et la partie arrière (1) étant reliées l'une à l'autre dans la région de leurs branches, de préférence étant reliées l'une à l'autre dans la région de bord de leurs branches (1c) respectives superposées de telle sorte qu'une surface de bord intérieure de la partie avant (2) tournée vers la partie arrière (1) soit collée à une surface de bord intérieure de la partie arrière (1) tournée vers l'avantage (2), et une région destinée à recevoir un article, en particulier un articles conique, de préférence un pot de fleurs ou un bouquet de fleurs, pouvant être réalisée entre la partie avant (2) et la partie arrière (1) en espaçant les parties l'une de l'autre, une ouverture étant réalisée à cet effet au moins entre les longs côtés de base disposés en haut, une poignée (4), en particulier une languette (4) pouvant être saisie à la main, étant fixée à la partie avant (1) au-dessus d'une ligne d'affaiblissement (3) disposée dans la partie avant (1), s'étendant entre les branches (1c, 2c), de préférence parallèlement aux côtés de base (1a, 1b) de la partie avant (1), au moyen de laquelle poignée une région (1d) de la partie avant (1) située au-dessus de la ligne d'affaiblissement (3) peut être séparée de la région (1e) de la partie avant (1) située en dessous de la ligne d'affaiblissement (3), **caractérisé en ce que** la partie arrière (2) et la région de la partie avant (1) située en dessous de la ligne d'affaiblissement (3) sont réalisées en matériau en papier ou en composite de papier et la région (1d) de la partie avant (1) située au-dessus de la ligne d'affaiblissement (3) est réalisée en un film de préférence transparent.

2. Elément d'emballage selon la revendication 1, **caractérisé en ce que** le collage (5) des branches (le, 2c) entre la partie avant (1) et la partie arrière (2) est réalisé de manière détachable au moins dans la région supérieure au-dessus de la ligne d'affaiblissement (3), en particulier par des points de colle espacés.

3. Élément d'emballage selon la revendication 2, **caractérisé en ce que** la région supérieure (1d) de la partie avant (1) peut être séparée de la partie arrière (2) au niveau du collage (5) au moyen de la poignée (4), en particulier sans détruire la région supérieure (1d) de la partie avant (1).

4. Élément d'emballage selon l'une quelconque des revendications précédentes, **caractérisé en ce que** la région inférieure (1e) de la partie avant (1) recouvre, au niveau de son bord supérieur, le bord inférieur de la région de film supérieure (1d) de la partie avant (1).

5. Élément d'emballage selon la revendication 4, **caractérisé en ce que** la ligne d'affaiblissement (3) est réalisée dans la région de film supérieure (1d) de la partie avant (1) et est recouverte par le bord supérieur de la région inférieure (1e) de la partie avant (1) ou est au moins adjacente à celle-ci.

6. Élément d'emballage selon la revendication 4 ou 5, **caractérisé en ce que** dans la région de recouvrement en dessous de la ligne d'affaiblissement (3), la région de film supérieure (1d) de la partie avant (1) et la région inférieure (1e) de la partie avant (1) sont reliées par un collage.

7. Élément d'emballage selon l'une quelconque des revendications précédentes, **caractérisé en ce que** la partie arrière (2) présente une ligne d'affaiblissement (6) s'étendant entre les branches (2c), de préférence parallèlement aux côtés de base.

8. Élément d'emballage selon la revendication 7, **caractérisé en ce que** la ligne d'affaiblissement (6) de la partie arrière (2) s'étend parallèlement à la ligne d'affaiblissement (3) de la partie avant (1), en particulier parallèlement à distance de celle-ci, notamment à une distance inférieure à 10 mm, de préférence inférieure ou égale à 5mm.

9. Élément d'emballage selon la revendication 7 ou 8, **caractérisé en ce que** la ligne d'affaiblissement (6) de la partie arrière (2) est disposée en affleurement avec l'arête supérieure de la région inférieure (1e) de la partie avant (1).

10. Élément d'emballage selon l'une quelconque des revendications précédentes, **caractérisé en ce que** la ligne d'affaiblissement (3) de la partie avant (1), en particulier également la ligne d'affaiblissement (6) de la partie arrière (2), sont disposées à une distance du côté de base court (1a, 2a) de la partie avant (1) et/ou de la partie arrière (2) qui est inférieure à 50 % de la distance entre les côtés de base long et court (1a, 1b, 2a, 2b).

11. Élément d'emballage selon l'une quelconque des revendications précédentes, **caractérisé en ce que** la hauteur du trapèze, et en particulier également la distance entre les côtés de base parallèles (1a, 1b) au niveau de la partie avant (1) est inférieure à la distance au niveau de la partie arrière (2), en particulier de telle sorte que la partie arrière (2) ne soit pas recouverte par la partie avant (1) dans la région de son côté de base supérieur (2b) du trapèze.

12. Élément d'emballage selon la revendication 11, **caractérisé en ce que** la région de la partie arrière (2) non recouverte peut être séparée de la région recouverte au niveau d'une ligne d'affaiblissement.

13. Élément d'emballage selon l'une quelconque des revendications précédentes, **caractérisé en ce qu'**il forme, dans l'état ouvert, un sachet fermé en bas ou un tuyau se rétrécissant avec des extrémités ouvertes des deux côtés.

14. Élément d'emballage selon l'une quelconque des revendications précédentes, **caractérisé en ce que** le matériau en papier ou en composite de papier de la partie avant (1) et de la partie arrière (2) dans la région des côtés de base inférieurs courts (1a, 2a) est réalisé sous forme hydrophobe, de préférence étanche à l'eau, en particulier par un revêtement ou un contre-collage, de préférence à une hauteur de 3 à 20 mm.

15. Élément d'emballage selon la revendication 14, **caractérisé en ce que** le revêtement (7) est réalisé par un premier ruban de film adhésif (7) qui est replié dans la région du côté de base inférieur court (1a) de la partie avant depuis son côté intérieur sur son côté extérieur et par un deuxième ruban de film adhésif (7) qui est replié dans la région du côté de base inférieur court (2a) de la partie arrière (2) depuis son côté intérieur sur le côté extérieur.

16. Élément d'emballage selon la revendication 15, **caractérisé en ce que** la partie avant (1) et la partie arrière (2) présentent chacune dans la région des deux coins inférieurs une découpe (8) ou un estampage (8) et la bande adhésive respective (7) est collée à elle-même dans ces régions de coin.
